# EUROPEAN PATENT SPECIFICATION

(11) **EP 1 795 425 B1**
(45) Date of publication and mention of the grant of the patent: **17.02.2010**
(21) Application number: 06256236.8
(22) Date of filing: 07.12.2006
(51) Int. Cl.: B62D 1/18

(54) **Adjustment mechanism for a steering column**
Einstellmechanismus für eine Lenksäule
Mécanisme d'ajustement de position pour une colonne de direction

(30) Priority: 07.12.2005 GB 0524980
(43) Date of publication of application: 13.06.2007
(73) Proprietor: NSK Steering Systems Europe Limited, Silverstone Drive Rowley's Green, Coventry CV6 6PA (GB); NSK Ltd., Shinagawa-ku Tokyo (JP)
(72) Inventor: Gibson, John Gareth, Allesley, Coventry CV5 9AZ (GB); Mitchell, Colin Andrew, Earls Barton, Northants NN6 0PP (GB)
(74) Representative: Naylor, Matthew John

(56) References cited:
- EP-A- 1 445 168
- EP-A1- 0 972 694
- FR-A1- 2 834 680
- GB-A- 2 352 286

## Description

The present invention is concerned with adjustment mechanisms, for use with steering columns for cars, for example. It is also concerned with steering columns formed with such adjustment mechanisms.

Known car steering columns are configured to allow the driver to adjust the position of the steering wheel. Typically, such steering columns have an adjustment mechanism including a clamping arrangement that can be unclamped by the driver to allow the position of the steering wheel to be adjusted and subsequently re-clamped to hold the steering wheel in the set position. Adjustment can be to place the steering wheel further from the driver (reach) and/or at a different height to the driver (rake).

Such a steering column can be seen in GB-A-2403692, in which an adjustment mechanism includes slotted interleaved clutch plates that allow positioning of the steering column in a desired position. A clamping arrangement is also provided, having a-fixed cam and a moving cam, the moving cam being rotatable relative to the fixed cam via a lever. A clamping bolt extends through the moving cam, the fixed cam and the slotted interleaved clutch plates. Tension is applied to the clamping bolt to hold the adjustment mechanism in the clamped configuration by rotation of the moving cam relative to the fixed cam.

FR-A-2 834 680 discloses an adjustable steering column with a fixed cam and a moving cam according to the preamble of claim 1. A torque arm of the fixed cam bears against a radial part of the moving cam to provide damping.

The present inventors have realized that such known adjustment mechanisms suffer from a problem of free play and/or rattle when in the undamped configuration. Such free play or rattle can be caused by clearance between the cam surfaces of the fixed and moving cam of the clamping arrangement when in the unclamped configuration.
Such free play is undesirable because it can confer to the driver a perception that the mechanism is faulty or of poor quality. It may also lead to undue wear of the cam surfaces through fretting of the surfaces against one another.

Accordingly, in a general aspect, the present invention provides biasing means for urging the cam surface of the fixed cam axially towards the cam surface of the moving cam when the clamping arrangement is in the unclamped configuration, in order to reduce free play between the cam surfaces in that configuration

In a first preferred aspect, the present invention provides a steering apparatus as set out in claim 1.

In this way, the biasing means can act to reduce free play or rattle between the cam surfaces of the fixed and moving cams when the adjustment mechanism is in the unclamped configuration. This provides an improved feel for the user but can also operate to reduce wear of the cam surfaces. Furthermore, since the biasing means may be provided separately from the main clamping arrangement, operation of the biasing means is not usually affected by wear on the cam surfaces.

Preferably, said one or more undulations have an indent to provide a positive engagement between the cam surfaces for indicating when the clamping arrangement is in one of the undamped configuration or the clamped configuration, and for retaining the clamping arrangement in that configuration. Typically, the clamping arrangement can be placed in the clamped configuration from the undamped configuration (and vice versa) by a rotation of the moving cam of 90° or less, preferably 60° or less.

The biasing means includes one or more tab member having a bearing surface for bearing against the fixed cam or the moving cam in order to urge the cam surfaces of the fixed and moving cams towards each other. The tab member is a flexible tab member. In that case, flexing of the tab from its rest position preferably provides at least a component of force in the axial direction for urging the cam surfaces of the fixed and moving cams towards each other.

The bearing surface of the or each tab member is formed to be non-parallel with the axis of rotation of the moving cam, so that the tab member is increasingly flexed as the clamping arrangement moves towards the unclamped configuration, thereby providing an increasing urging force to retain the cam surfaces together. Most preferably, the bearing surface of the or each tab member is formed to angle inwardly towards the axis of rotation of the moving cam towards a free end of the tab member.
In this way, increased axial movement of the moving cam relative to the fixed cam causes an increase in flexing of the tab, thereby causing an increased urging force to urge the cam surfaces of the fixed and moving cams together.

Preferably, the bearing surface of the tab member bears against a profiled surface of either the moving cam or the fixed cam, the profiled surface being shaped to provide a greater flex of the tab member in the undamped configuration than in the clamped configuration. In effect, the tab member is a snail cam follower, the profiled surface providing the snail cam. Preferably, the profiled surface is formed at the periphery of either the moving cam or the fixed cam.

The profiled surface may include a clamping stop to prevent rotation of the moving cam past the clamped configuration. Similarly, the profiled surface may include an unclamping stop to prevent rotation of the moving cam past the unclamped configuration.

Preferably, in the clamped configuration, there is a clearance between the bearing surface and the profiled surface. This allows the operation of the clamping arrangement to be unhindered by the tab member in the normal driving condition.
Furthermore, it allows the normal rest position of the tab member to be retained in the normal driving condition so that creep or other materials aging processes do not cause permanent deformation of the tab member.

Typically, two biasing means are provided, opposing each other. Preferably, the tab members are provided on laterally extending arms of the fixed cam or moving cam.

In a second preferred aspect, the present invention provides a steering column, being adjustable for rake and/or reach, including an adjustment mechanism according to the first aspect.

It is to be understood that any of the preferred and/or optional features may be applied separately or in any combination with any of the aspects of the invention, unless the context demands otherwise.

Preferred embodiments of the invention will now be described by way of example, with reference to the accompanying drawings, in which:
Fig. 1 shows a side view of a steering assembly according to an embodiment of the present invention;
Fig. 2 shows an exploded partial perspective view of a damping arrangement for use with an embodiment of the present invention;
Fig. 3 shows the clamping arrangement of Fig. 2 in the clamped configuration;
Fig. 4 shows the clamping arrangement of Fig. 2 in the undamped configuration;
Fig. 5 shows an alternative view to that of Fig. 4.

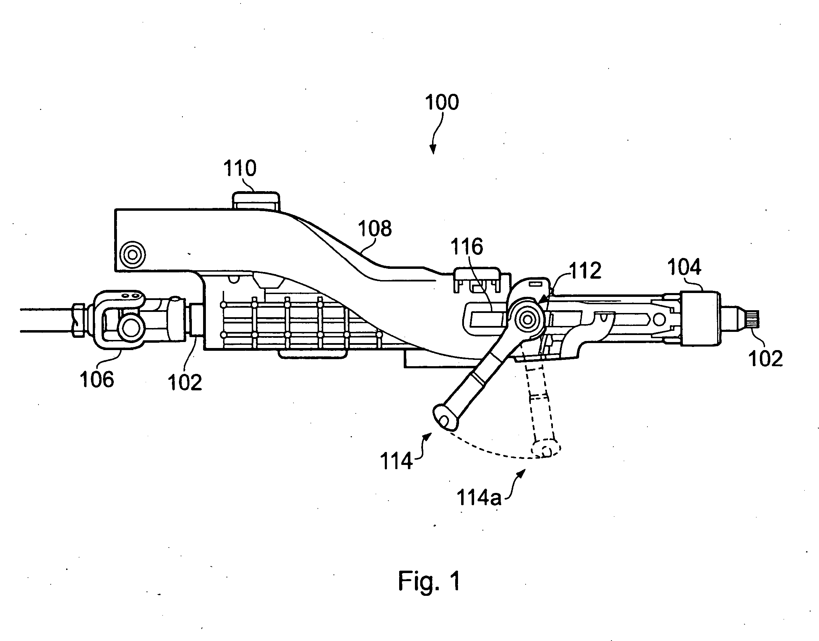

Fig. 1 shows a side view of a steering assembly 100 according to an embodiment of the present invention. A steering shaft 102 extends through a rearward bearing housing 104, though a steering column to a universal joint 106 at the forward end of the steering column. A steering wheel (not shown) is provided at the rearward end of steering shaft 102. The steering assembly has a main bracket 108 for attachment to a car cross beam (not shown) at attachment point 110

The rake and reach position of the steering wheel is adjustable by a user (typically the driver). A clamping arrangement 112 is provided, including a clamping bolt (not shown), a fixed cam 120 and a moving cam 122 (not shown in Fig. 1 but shown in the remaining figures). The moving cam is attached to lever 114. Movement of lever 114 to position 11 4a places the clamping arrangement in the unclamped configuration, so that the steering wheel can be placed in the desired position by movement of the clamping bolt along reach adjustment slot 116 and rake adjustment slot (not shown), in a way known in the related art, for example from GB-A-2403692, the content of which is hereby incorporated by reference.

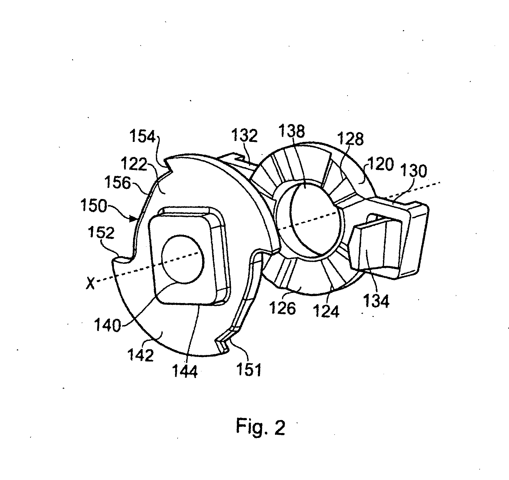

Fig. 2 shows an exploded view of the arrangement of the fixed cam 120 and the moving cam 122.
Fixed cam 120 has a cam surface comprising a series of raised portions 124 and valley portions 128. Each raised portion has a slight indent 128 formed along a radial line close to the centre of the raised portion. At the periphery of the fixed cam are formed lateral arms 130, 132. Each lateral arm has a flexible tab 134, 136 projecting from the lateral arms, the inwardly-facing surface of the flexible tabs being formed at an angle of 70-80° from the plane perpendicular to the principal axis X of the clamping arrangement. Note that the flexible tabs 134, 136 are formed to be point symmetrical around the principal axis X.

In this embodiment, the fixed cam, including the lateral arms and the flexible tabs, is formed in a single piece from plastics material by injection moulding, in a way that will be well understood by the skilled person. However, it is also possible that the fixed cam could be formed from several pieces. For example, the flexible tabs could be attached to the lateral arms in a separate step.

The fixed cam has a central aperture 138 for the clamping bolt (not shown) to pass through.

The moving cam 122 has a cooperating cam surface (not shown in Fig..2) for engagement with the cam surface of the fixed cam. The cam surface of the moving cam has a series of raised portions and valley portions. The raised portions do not have an indent and are shaped to cooperate with the cam surface of the fixed cam so that, in the unclamped configuration, the raised portions of the moving cam are located in the valley portions of the fixed cam Subsequent rotation of the moving cam requires that the raised portions of the moving cam must ride up the raised portions of the fixed cam, finally becoming stably located in the indents 128 of the raised portions of the fixed cam. Since the raised portions of the fixed cam are therefore opposed to the raised portions of the moving cam, the fixed cam and moving cam are forced apart, therefore increasing the tension in the clamping bolt (not shown), and therefore clamping the clamping arrangement in the desired rake and reach position.

In this embodiment, the moving cam is formed in a single piece from plastics material.
However, in alternative embodiments, the raised portions of the cam surface of the moving cam need not be integral with the moving cam. Instead they may, for example, be ball bearings captured in position in the moving cam. This can reduce the friction between the fixed and moving cam, improving the ease of adjustment of the clamping arrangement.

The moving cam includes a central aperture 140 aligned with axis X. The outer face 142 of the moving cam has a square protruding portion 144 coaxial with the aperture 140. The purpose of this protruding portion is to provide an engagement between the moving cam and the adjustment lever 114 (not shown in Fig. 2). Rotation of the adjustment lever 144 therefore causes relative rotation between the fixed cam and the moving cam, thereby configuring the clamping arrangement between the clamped configuration and the unclamped configuration.

The moving cam has a snail cam 150 formed at its periphery. This is a profiled surface that is adapted to engage with the inwardly facing surface of flexible tab 136. The surface of the snail cam is substantially parallel with (but not aligned with) axis X. The face of profile of the snail cam 150 can be angled the same as the tab 136 to reduce wear. The snail cam 150 is concave and formed on an outer circumferential surface of the substantially circle-shaped moving cam. Snail cam 150 has a clamped configuration stop 152 and an unclamped configuration stop 154. These stops define the allowable limit of travel for the flexible tab 136 within the snail cam profile. As shown in Fig.2, another snail cam 151 is formed on an opposite side relative to the snail cam 150 to be point symmetrical with each other around the principal axis X. The flexible tab 134 engages with the snail cam 151.

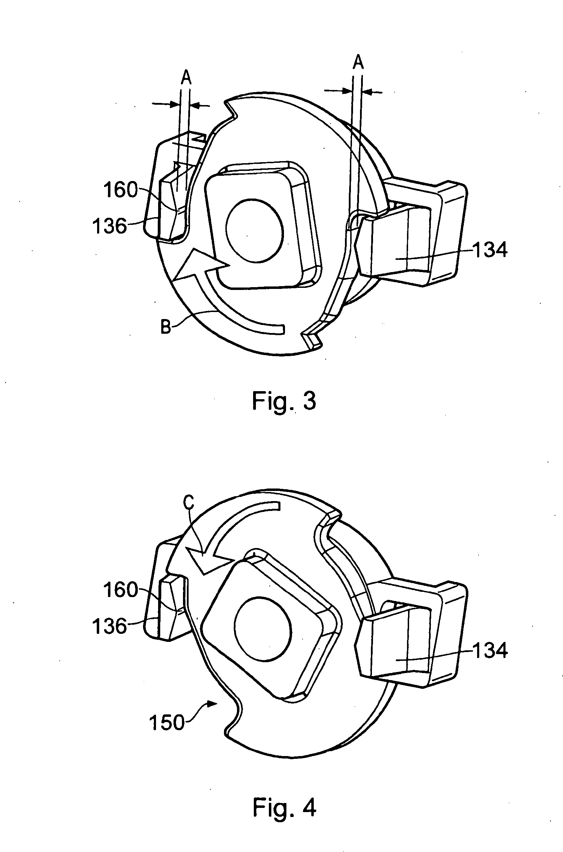

The snail cam is shaped so that, when the clamping arrangement is in the clamped configuration, the inwardly facing surface of flexible tab 136 has a clearance A from the snail cam surface (see Fig. 3). Arrow B in Fig. 3 shows the direction of rotation that has placed the arrangement in the clamped configuration.

However, when the damping arrangement is in the unclamped configuration, the inwardly facing surface of flexible tab 136 bears against the snail cam surface, at portion 156 (see Fig. 4). Thus, in travelling between the clamped and unclamped configurations, the flexible tab 136 comes into bearing engagement with the snail cam.
As the moving cam is rotated further towards the unclamped configuration, the flexible tab 136 is flexed further from its rest position until it is located at portion 156 of the snail cam surface. Arrow C in Fig. 4 shows the direction of rotation that has placed the arrangement in the unclamped configuration.

As shown in Figs. 3 and 4, the inwardly-facing surface of flexible tab 136 has a ridge 160, at which ridge the flexible tab bears against the snail cam. Flexible tab 134 is similarly formed.

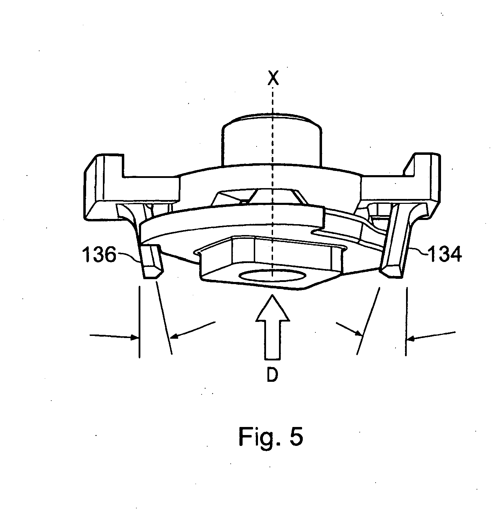

Fig. 5 shows the effect of forming the flexible tabs 134,136 at an angle to the direction parallel to axis X. This angle is between 10° and 20° in this embodiment. The effect of placing the clamping arrangement in the unclamped configuration is for the ridge 160 of the flexible tabs to bear against the snail cam and therefore flex the flexible tabs outwardly. The bias of the flexible tabs therefore urges back against the moving cam.
The angle at which the flexible arms are set means that there is a resultant force D pressing the moving cam towards the fixed cam, thus ensuring that the cam surface of the moving cam is held in contact with the cam surface of the fixed cam, irrespective of any tension in the clamping bolt. So, in the unclamped configuration (as shown in Fig. 5), there is a reduced tendency for there to be free play and/or rattle between the fixed cam and moving cam. This improves the feel of the rake and reach adjustment for the user.

On reading this disclosure, modifications of these embodiments, further embodiments and modifications thereof will be apparent to the skilled person, and as such are within the scope of the present invention. In particular, different arrangements for the biasing means will be apparent, having a similar functional effect to the biasing means shown in Figs. 2 to 5. Furthermore, it will be clear that the flexible tabs need not be fixed with respect to the fixed cam, but may be fixed with respect to the moving cam, the snail cam being formed at a periphery of the fixed cam.

The cams may be formed of sintered body and connect with the flexible tabs 134, 136. Further, in the aforementioned description, there required two sets of the flexible tabs and the snail cams. However, the invention does not limit to require two sets, it is enough if there is one set of the flexible tab and the snail cam. In a case where a plurality of sets are arranged along with circumferential direction of the cam, it is preferable to arrange them with constant intervals. Due to this structure, centering of the moving cam and the fixed cam are made precisely.

## Claims

1. A steering apparatus including an adjustment mechanism, the adjustment mechanism having:
a clamping arrangement (112) configurable between an unclamped configuration, in which the position of the steering apparatus is adjustable, and a clamped configuration;
a fixed cam (120); and
a moving cam (122),
wherein a cam surface of the fixed cam (120) opposes a cam surface of the moving cam (122), the cam surface of the fixed cam (120) and/or moving cam (122) having one or more undulations (124, 128) and the moving cam being rotatable relative to the fixed cam (120) so that said one or more undulations (124, 128) causes relative axial movement of the fixed (120) and moving (122) cam to provide a clamping force to the clamping arrangement (112),
**characterized in that**
the adjustment mechanism further including biasing means for urging the cam surface of the fixed cam (120) axially towards the cam surface of the moving cam (122) when the clamping arrangement (112) is in the unclamped configuration, in order to reduce free play between the cam surfaces **in that** configuration,
the biasing means including one or more flexible tab member (136) having a bearing surface for bearing against the fixed cam (120) or the moving cam (122) in order to urge the cam surfaces of the fixed and moving cams towards each other, said bearing surface of the or each tab member being formed to be non-parallel with the axis of rotation of the moving cam (122), so that the tab member is increasingly flexed as the clamping arrangement moves towards the unclamped configuration, thereby providing an increasing urging force to retain the cam surfaces together.

2. A steering apparatus according to claim 1 wherein said one or more undulations (124, 128) have an indent to provide a positive engagement between the cam surfaces for indicating when the clamping arrangement is in one of the unclamped configuration or the clamped configuration, and for retaining the clamping arrangement in that configuration.

3. A steering apparatus according to claim 1 or 2 wherein the tab member (136) is a flexible tab member, flexing of the tab from its rest position providing at least a component force in the axial direction for urging the cam surfaces of the fixed (120) and moving (122) cams towards each other.

4. A steering apparatus according to any of claims 1 to 3 wherein the bearing surface of the or each tab member (136), is formed to angle inwardly towards the axis of rotation (X) of the moving can towards a free end of the tab member.

5. A steering apparatus according to any one of claims 1 to 4 wherein said bearing surface bears against a profiled surface of either the moving cam (122) or the fixed cam (120), the profiled surface being shaped to provide a greater flex of the tab member (136) in the unclamped configuration than in the clamped configuration.

6. A steering apparatus according to claim 5 wherein the profiled surface is formed at the periphery of either the moving cam (122) or the fixed cam (120).

7. A steering apparatus according to claim 5 or claim 6 wherein the profiled surface includes a clamping stop (152) to prevent rotation of the moving cam (122) past the clamped configuration.

8. A steering apparatus according to any one of claims 5 to 7 wherein the profiled surface includes an unclamping stop (154) to prevent rotation of the moving cam (122) past the unclamped configuration.

9. A steering apparatus according to any one of claims 5 to 8 wherein, in the clamped configuration, there is a clearance between the bearing surface and the profiled surface.

10. A steering apparatus according to any one of claims 1 to 9 wherein the tab members (136) are provided on laterally extending arms of the fixed cam (120) or moving cam (122).

11. A steering column, being adjustable for rake and/or reach, including a steering apparatus according to any one of claims 1 to 10.

## Patentansprüche

1. Lenkvorrichtung mit einem Einstellmechanismus, wobei der Einstellmechanismus enthält:
eine Klemmanordnung (112), die zwischen einer nicht festgeklemmten Konfiguration, in der die Position der Lenkvorrichtung einstellbar ist, und einer festgeklemmten Konfiguration einstellbar ist;
eine feststehende Nocke (120); und
eine sich bewegende Nocke (122);
wobei eine Nockenoberfläche der feststehenden Nocke (120) einer Nockenoberfläche der sich bewegenden Nocke (122) gegenüberliegt, die Nockenoberfläche der feststehenden Nocke (120) und/oder der sich bewegenden Nocke (122) wenigstens eine Vertiefung (124, 128) haben und die sich bewegende Nocke im Bezug auf die feststehende Nocke (120) derart gedreht werden kann, dass die wenigstens eine Vertiefung (124, 128) einer relative axiale Bewegung der feststehenden Nocke (120) und der sich bewegenden Nocke (122) bewirkt, um eine Klemmkraft für die Klemmanordnung (112) bereitzustellen,
**dadurch gekennzeichnet, dass**
der Einstellmechanismus weiterhin eine Vorspanneinrichtung enthält, der die Nockenoberfläche der feststehenden Nocke (120) axial zur Nockenoberfläche der sich bewegenden Nocke (122) drückt, wenn sich die Klemmanordnung in der nicht festgeklemmten Konfiguration befindet, um das freie Spiel zwischen den Nockenoberflächen in dieser Konfiguration zu verringern, und
die Vorspanneinrichtung wenigstens ein flexibles Vorsprungselement (136) enthält, das eine Lagerfläche hat, die auf der feststehenden Nocke (120) oder der sich bewegenden Nocke (122) lagert, um die Nockenoberflächen der feststehenden und der sich bewegenden Nocke zueinander zu drücken, wobei die Lagerfläche des wenigstens einen Vorsprungselementes derart ausgebildet ist, dass sie nicht parallel zur Drehachse der sich bewegenden Nocke (122) ist, so dass das Vorsprungselement in zunehmender Weise gebogen wird, wenn sich die Klemmanordnung in die nicht festgeklemmte Konfiguration bewegt, wodurch eine zunehmende Druckkraft erzeugt wird, um die Nockenoberflächen zusammenzuhalten.

2. Lenkvorrichtung nach Anspruch 1, bei der die wenigstens eine Vertiefung (124, 128) eine Kerbe hat, um einen sicheren Eingriff zwischen den Nockenoberflächen zu erzeugen, um zu indizieren, wann sich die Klemmanordnung entweder in der nicht festgeklemmten Konfiguration oder der festgeklemmten Konfiguration befindet, und um die Klemmanordnung in dieser Konfiguration beizubehalten.

3. Lenkvorrichtung nach Anspruch 1 oder 2, bei der das Vorsprungselement (136) ein flexibles Vorsprungselement ist und das Biegen des Vorsprungs aus seiner Ruhestellung wenigstens eine Teilkraft in der axialen Richtung erzeugt, um die Nockenoberflächen der feststehenden (120) und der sich bewegenden (122) Nocke aufeinander zu zu drücken.

4. Lenkvorrichtung nach einem der Ansprüche 1 bis 3, bei der die Lagerfläche des wenigstens einen Vorsprungselementes (136) so ausgebildet ist, dass sie nach innen zur Drehachse (X) der sich bewegenden Nocke zu einem freien Ende des Vorsprungselementes abgewinkelt ist.

5. Lenkvorrichtung nach einem der Ansprüche 1 bis 4, bei der die Lagerfläche auf einer profilierten Oberfläche entweder der sich bewegenden Nocke (122) oder der feststehenden Nocke (120) ruht, wobei die profilierte Oberfläche derart geformt ist, dass sie eine größere Biegung des Vorsprungselementes (136) in der nicht festgeklemmten Konfiguration als in der festgeklemmten Konfiguration ermöglicht.

6. Lenkvorrichtung nach Anspruch 5, bei der die profilierte Oberfläche am Umfang entweder der sich bewegenden Nocke (122) oder der feststehenden Nocke (120) ausgebildet ist.

7. Lenkvorrichtung nach Anspruch 5 oder 6, bei der die profilierte Oberfläche einen Klemmanschlag (152) enthält, der eine Drehung der sich bewegende Nocke (122) über die festgeklemmte Konfiguration hinaus verhindert.

8. Lenkvorrichtung nach einem der Ansprüche 5 bis 7, bei der die profilierte Oberfläche einen Löseanschlag (154) enthält, der eine Drehung der sich bewegenden Nocke (120) über die ungeklemmte Konfiguration hinaus verhindert.

9. Lenkvorrichtung nach einem der Ansprüche 5 bis 8, bei der es in der festgeklemmten Konfiguration einen Zwischenraum zwischen der Lagerfläche und der profilierten Oberfläche gibt.

10. Lenkvorrichtung nach einem der Ansprüche 1 bis 9, bei der die Vorsprungselemente (136) auf sich seitlich erstreckenden Armen der feststehenden Nocke (120) oder der sich bewegenden Nocke (122) vorgesehen sind.

11. Lenksäule die in Neigung und/oder Reichweite eingestellt werden kann, enthaltend eine Lenkvorrichtung nach einem der Ansprüche 1 bis 10.

## Revendications

1. Appareil de direction comportant un mécanisme d'ajustement, le mécanisme d'ajustement comportant:
un agencement de serrage (112) pouvant être configuré entre une configuration non serrée, dans laquelle la position de l'appareil de direction est ajustable, et une configuration serrée;
une came fixe (120); et
une came mobile (122),
où une surface de came de la came fixe (120) est opposée à une surface de came de la came mobile (122), la surface de came de la came fixe (120) et/ou de la came mobile (122) ayant une ou plusieurs ondulations (124, 128), et la came mobile pouvant tourner relativement à la came fixe (120) de sorte qu'une ou plusieurs ondulations précitées (124, 128) provoquent un mouvement axial relatif de la came fixe (120) et de la came mobile (122) pour réaliser une force de serrage sur l'agencement de serrage (112),
**caractérisé en ce que**
le mécanisme d'ajustement comporte en outre des moyens de sollicitation pour solliciter la surface de came de la came fixe (20) axialement vers la surface de came de la came mobile (122) lorsque l'agencement de serrage (112) se trouve dans la configuration desserrée afin de réduire un libre jeu entre les surfaces de came dans cette configuration,
les moyens de sollicitation comportant un ou plusieurs éléments de patte flexible (136) ayant une surface porteuse pour porter contre la came fixe (120) ou la came mobile (122) pour solliciter les surfaces des cames fixe et mobile l'une vers l'autre, ladite surface porteuse du ou de chaque élément de patte étant formée pour être non-parallèle avec l'axe de rotation de la came mobile (122) de sorte que l'élément de patte est flêchi de plus en plus lorsque l'agencement de serrage se déplace vers la configuration desserrée en réalisant ainsi une force de sollicitation de plus en plus grande pour retenir les surfaces de came ensemble.

2. Appareil de direction selon la revendication 1, dans lequel une ou plusieurs ondulations précitées (124, 128) ont une encoche pour réaliser une prise positive entre les surfaces de came pour indiquer lorsque l'agencement de serrage se trouve dans une de la configuration non serrée ou de la configuration serrée, et pour retenir l'agencement de serrage dans cette configuration.

3. Appareil de direction selon la revendication 1 ou 2, dans lequel l'élément de patte (136) est un élément de patte flexible, la flexion de la patte de sa position de repos fournissant au moins une force de composant dans la direction axiale pour solliciter les surfaces des cames fixe (120) et mobile (122) l'une vers l'autre.

4. Appareil de direction selon l'une quelconque des revendications 1 à 3, dans lequel la surface porteuse du ou de chaque élément de patte (136) est formée pour être angulaire vers l'intérieur, vers l'axe de rotation (X) de la came mobile vers une extrémité libre de l'élément de patte.

5. Appareil de direction selon l'une quelconque des revendications 1 à 4, dans lequel ladite surface porteuse porte contre une surface profilée soit de la came mobile (122) soit de la came fixe (120), la surface profilée étant configurée pour permettre une plus grande flexion de l'élément de patte (136) dans la configuration desserrée que dans la configuration serrée.

6. Appareil de direction selon la revendication 5, dans lequel la surface profilée est formée à la périphérie soit de la came mobile (122) soit de la came fixe (120).

7. Appareil de direction selon la revendication 5 ou la revendication 6, dans lequel la surface profilée comporte un arrêt de serrage (152) pour empêcher la rotation de la came mobile (122) au-delà de la configuration serrée.

8. Appareil de direction selon l'une quelconque des revendications 5 à 7, dans lequel la surface profilée comporte un arrêt de desserrage (154) pour empêcher la rotation de la came mobile (122) au-delà de la configuration desserrée.

9. Appareil de direction selon l'une quelconque des revendications 5 à 8, dans lequel, dans la configuration serrée, il y a un jeu entre la surface porteuse et la surface profilée.

10. Appareil de direction selon l'une quelconque des revendications 1 à 9, dans lequel les éléments de patte (136) sont réalisés sur des bras s'étendant latéralement de la came fixe (120) ou de la came mobile (122).

11. Colonne de direction, ajustable en inclinaison et/ou étendue, comportant un appareil de direction selon l'une quelconque des revendications 1 à 10.
